(19) Europäisches Patentamt
European Patent Office
Office européen des brevets

(11) **EP 4 455 629 A1**

(12) **EUROPEAN PATENT APPLICATION**

(43) Date of publication:
**30.10.2024 Bulletin 2024/44**

(21) Application number: **23169598.2**

(22) Date of filing: **24.04.2023**

(51) International Patent Classification (IPC):
***G01M 3/28*** (2006.01) ***E03B 7/00*** (2006.01)
***F17D 5/06*** (2006.01)

(52) Cooperative Patent Classification (CPC):
**G01M 3/2807; E03B 7/003; G01M 3/2853;**
**F17D 5/06**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **LAURICELLA, Marco**
**68199 Mannheim (DE)**
• **LENDERS, Felix**
**64293 Darmstadt (DE)**

• **BISKOPING, Matthias**
**69493 Hirschberg (DE)**
• **SCHLOEDER, Matthias**
**69126 Heidelberg (DE)**
• **FOKKEN, Eike**
**69214 Eppelheim (DE)**
• **PRIMAS, Bernhard**
**68165 Mannheim (DE)**
• **GUTERMUTH, Georg**
**69115 Heidelberg (DE)**

(74) Representative: **Maiwald GmbH**
**Engineering**
**Elisenhof**
**Elisenstrasse 3**
**80335 München (DE)**

(54) **GUIDED LEAK SOURCE LOCATION FINDER IN WATER DISTRIBUTION NETWORK**

(57)    The invention relates to the field of water distribution network, particularly to a method for locating a leak in a water distribution network. The method comprises the steps of: Providing a directed graph that represents the water distribution network (10), the nodes of the graph comprising at least one reservoir-node ($N_r$), at least one junction-node ($N_j$), and at least one demand-point-node ($N_d$).

Providing, under nominal conditions, a nominal reservoir flow ($f_r$) and a nominal reservoir pressure ($p_r$), and a nominal demand flow ($f_d$).

Constructing a calibrated hydraulic model (11).

Computing, for the calibrated hydraulic model (11), a computed nominal junction flow ($fm_{ji}$) for each junction-node ($N_{ji}$) of the water distribution network (10).

Measuring, a measured reservoir flow ($fm_r$); and, if, for at least one of the reservoir-nodes ($N_{ri}$), the measured reservoir flow ($fm_{ri}$) is greater than the nominal reservoir flow ($f_{ri}$) plus a first predefined flow ($f1_{pd}$):

measuring a measured next junction flow ($fm_{jk+1}$) of a selected next junction-node ($N_{jk+1}$) in downstream direction, while the measured next junction flow ($fm_{jk+1}$) in the selected branch is greater than the computed next junction flow ($f_{jk+1}$) plus a second predefined flow ($f2_{pd}$).

**Fig. 2**

**Description**

Field of the Invention

The invention relates to the field of water distribution network, particularly to a method for locating a leak in a water distribution network. The invention further relates to a program element, to a computer-readable storage medium and to a use.

Background

A water distribution network may in many cases a complex building. And, stopping water loss through a leak, anywhere in the water distribution network, may be highly desirable. Thus, identifying the position of leaks in water distribution networks may be a basis for a quick and cost-effective intervention aimed at stopping water losses. However, this may be a difficult task since water pipes are in many cases under the ground level and visual inspection may be difficult or not possible at all. Moreover, water networks usually have a limited number of sensors installed, thus data-based techniques often fail to precisely locate the leak position in the network. However, in at least some cases, there may be a chance to collect additional data, e.g. via manual sampling performed by field personnel, to provide additional information on the network status that could be used for locating the leak. Manual sampling is expensive and time consuming, but it is often necessary to compensate the lack of measurements. A method that contributes to minimize a number of manual samplings and to reduce the time between a leak event is reported and its location is identified may be helpful.

Description

It is an objective of the invention to provide a method that contributes to locating a leak in a water distribution network. This objective is achieved by the subject-matter of the independent claims. Further embodiments are evident from the dependent claims and the following description.
One aspect relates to a computer-implemented method for locating a leak in a water distribution network. The method comprises the steps of:

> providing a directed graph that represents the water distribution network, the nodes of the graph comprising at least one reservoir-node, at least one junction-node, and at least one demand-point-node, which represent a reservoir, a junction, and a demand point of the water distribution network, respectively, the edges of the graph comprising at least one pipe-edge, which represents a pipe;
> providing, under nominal conditions, a nominal reservoir flow and a nominal reservoir pressure for each reservoir-node, and a nominal demand flow for each demand point node of the water distribution network;
> constructing a calibrated hydraulic model of the water distribution network, based on the nominal reservoir flow, the nominal reservoir pressure, and the nominal demand flow for each related node of the water distribution network;
> computing, for the calibrated hydraulic model of the water network, a computed nominal junction flow for each junction-node of the water distribution network;
> measuring, for each reservoir-node, a measured reservoir flow;
> if, for at least one of the reservoir-nodes, the measured reservoir flow is greater than the nominal reservoir flow plus a first predefined flow:
>
>> taking, in downstream direction, a junction-node with two or more branches;
>> selecting, in downstream direction, a next junction-node, which is connected to the junction-node;
>> measuring a measured next junction flow of the selected next junction-node in downstream direction;
>> continuing the steps of taking, selecting, and measuring, while the measured next junction flow in the selected branch is greater than the computed nominal reservoir flow plus a second predefined flow,
>> so that the leak is located based on the measured next junction flow.

The water distribution network usually comprises sources, like a reservoir, sinks (e.g. consumers or customers) that are often called demand points, and intermediate components, such as so-called junctions. A junction may have several branches. The reservoir, the demand points and/or the junctions are connected by means of pipes. Additionally, the water distribution network may comprise further components, for instance one or more tanks and/or pumps.
The water distribution network may be represented by a directed graph. The one or more reservoirs may be represented as reservoir-nodes, the one or more junction may be represented as junction-nodes, and the demand points may be represented as demand-point-nodes, and the pipes may be represented as pipe-edges in said directed graph.

The components may have properties, which may be represented as attributes of the nodes or edges of the graph. The reservoir may have a nominal reservoir flow and a nominal reservoir pressure, which can be measured at its output. (Note, that in this application the term "flow" may be used for "flow rate".) A reservoir is considered as unlimited source of water, where its pressure - often called "head" - is considered as always being equal to a known constant value. Thus, the reservoir pressure is for most cases equal to the nominal reservoir pressure. The reservoir flow may be called "nominal reservoir flow" for regular or "fault-free" operation. A leak in the water distribution network may lead to a different (i.e. higher) reservoir flow. The reservoir may have means to monitor the reservoir flow. The demand points have a nominal demand flow, which can be measured at its input. Some of the demand points may have metering devices - e.g. "smart meters" -, but in at least some water distribution networks, there may be no means for measuring the nominal demand flow continuously, and their demand flow may only be available in form of demand forecast and/or historical time-patterns. The pipes may have a friction loss, e.g. per meter or for a defined section, e.g. between two nodes.

In at least some cases, the water distribution network may be partitioned into a plurality of district metered areas, DMAs. At least some of the DMAs may have metering devices configured for measuring its DMA-flow on the DMA's at least one inlet point and/or on the DMA's at least one outlet point. Metering devices may also be available at an outlet of pumping stations.

Based on the directed graph, the nominal reservoir flow, the nominal reservoir pressure, and the nominal demand flow for each related node of the water distribution network, a calibrated hydraulic model of the water distribution network can be constructed. The calibrated hydraulic model may be used to simulate the water distribution network's behaviour under nominal conditions. For the calibrated hydraulic model of the water network, a computed nominal junction flow for each junction-node of the water distribution network may be computed. As a result, a nominal flow for each node of the water network under nominal conditions may be available, i.e. the calibrated hydraulic model may have "virtual sensors" for all nodes and pipes where no metering or instrumentation is installed. For at least some nodes of the water distribution network, the flow may be verified by real measurements and/or possibly corrected.

Since for each reservoir-node, a measured reservoir flow is measured on a regular basis or even continuously, an increase of the measured reservoir flow - which may be caused by a leak somewhere in the water distribution network - may be noticed quite fast. If, for at least one of the reservoir-nodes, the measured reservoir flow is greater than the nominal reservoir flow plus a first predefined flow, a leak-locating subroutine may be started.

Said subroutine may comprise taking, in downstream direction, a junction-node with two or more branches. The leak could be in any one of these branches. So, a next junction-node, in downstream direction, is selected, which is connected to the junction-node. At this selected next junction-node in downstream direction, a measured next junction flow is obtained.

If this measured next junction flow is increased, compared to the computed nominal junction flow of this next junction (the computed flow taken from the calibrated hydraulic model) the leak-locating subroutine may be continued in this branch. In other words, if the measured next junction flow is greater than the computed nominal next junction flow plus a second predefined flow, the leak-locating subroutine - of taking, selecting, and measuring - may be continued in this branch. The second predefined flow may, e.g., be the same as the first predefined flow, or may be slightly smaller. If the measured next junction flow is (essentially) equal to the computed nominal next junction flow, the leak is not in that branch, so that another branch should be selected for measuring. After one or more iterations of this leak-locating subroutine, the measured next junction flow may be (essentially) equal to the computed nominal next junction flow, so that an inference is possible that the leak is probably in an area of the node before. Or, the method comes to a final node, i.e. a demand-point-node, so that an inference is possible that the leak is probably in an area of this final node. In both cases, the leak is located based on the measured next junction flow.

Hence, this method may contribute essentially to locating a leak in a water distribution network, thus accelerating the leak locating process. Further advantageously, this computer-aided method can be used for guiding service personnel through the water distribution network, thus reducing the number of measurements required for finding the leak. This method may be particularly advantageous for water distribution network, which have only few metering devices installed.

In various embodiments, the selecting of the next junction-node is done in a breadth-first manner and/or based on a sensitivity analysis. The selecting and measuring may only be done, until a branch with higher flow has been found. This may be combined with a sensitivity analysis - e.g. the one described below - to identify which nodes will bring more relevant information towards the determination of the leak location. This approach advantageously may further reduce the number of measurements required for finding the leak.

In various embodiments, the measuring of the selected next junction-node is done by a temporary measuring device. The temporary measuring device may, e.g., be brought by service personnel. The service personnel may be instructed by this method, particularly by the computed "selecting" step. In cases when at least one of the junction-nodes may have an own metering device, the finding process may further be accelerated.

In some embodiments, the nodes of the graph further comprise at least one tank-node, which represents a tank, for which, under nominal conditions, a nominal tank flow and a nominal tank pressure for the tank-node is provided, and the constructing of the calibrated hydraulic model of the water network is further based on the nominal tank flow and the nominal tank pressure for the tank-node.

In some embodiments, the edges of the graph further comprise at least one pump-edge, which represents a pump, and the constructing of the calibrated hydraulic model of the water network is further based on the nominal pump flow for the pump-edge. The pump may have an own metering device, so that the calibration of the model can be improved and/or less measurements may be required for locating the leak.

In various embodiments, the nominal demand flow for the at least one demand-point-node is obtained by a demand forecast, by a historical time-pattern, and/or by a metering device at an input of the demand-point-node.

In some embodiments, the water distribution network is partitioned into a plurality of district metered areas, DMAs, wherein a DMA-flow is measured on the DMA's at least one inlet point and/or on the DMA's at least one outlet point. The partitioning of water distribution network into DMAs where the input and/or output flow is measured may further accelerate the leak finding process, since a preliminary computer-aided procedure may be performed, e.g. in parallel, for all DMAs. Said procedure may comprise a computation of the flow balance for each DMA, meaning that the difference between the input flow and the output flow of a DMA may be compared to the sum of the nominal demand of all DMA's demand-point-nodes, plus the flow provided by reservoirs and/or tanks that may be part of said DMA, minus the flow consumed by other sink-nodes that may be part of the DMA. If said quantities are similar enough, meaning that their numerical difference is smaller than a predefined value, the DMA may be marked as fault-free, otherwise a leak may be present in the considered DMA and the described leak-finding procedure may be performed "inside" the DMA. This preliminary routine advantageously may narrow the network area where the leak may be, and may further reduce the time required for finding and/or isolating the leak.

In various embodiments, the calibrated hydraulic model of the water distribution network is further based on flow balance of the at least one junction-node and/or on friction losses in the at least one pipe-edge, and on the nominal reservoir flow and the nominal reservoir pressure for each reservoir-node.

For the calibrated hydraulic model, a discrete time model may be used, where the considered time horizon is divided into T equidistant intervals, indexed by $t \in \{1, ..., T\}$. Without loss of generality, an optimization horizon of one day may be considered, divided into 24 periods of one hour each, which gives a discretization interval $\Delta t = 1$ hour. This may correspond to a discretization with which demand forecast and electricity prices are provided.

For each link $c = (i,j)$, $c \in E$, its flow variable may be denoted with $q_{et}$, which is positive if the flow is directed from $i$ to $j$, and negative otherwise, with $i,j \in N$ representing network nodes, e.g. reservoir-nodes $N_r$, junction-nodes $N_j$, and demand-point-nodes $N_d$. The flow is always non-negative for pumps $E_{pu}$ and for certain pipes $E_{pi}$, which allowing only unidirectional flow via check valves. For water distribution network problems a pressure may be measured as a sum of geodetic height and elevation difference $\Delta h = \frac{p}{\rho g}$ due to hydraulic pressure. This may be named as nodes "head", and is denoted here by $h_{nt}$, with $n \in N$. The head increase for pumps is defined by $\Delta h_{pt}$, with $p \in E_{pu}$.

The water distribution network may then be described by a quasi-stationary, discrete-time hydraulic model, describe by the following equations adopted to model the various network elements.

Reservoir-nodes $N_r$ are considered as unlimited sources of water, where the head is always equal to a known constant value $\overline{H}_n$ with $n \in N_r$, resulting in:

$$h_{nt} - \overline{H}_n = 0, \forall n \in N_r. \tag{1}$$

Tank-nodes $N_t$ are modelled via a discrete-time flow and mass balance equation:

$$h_{nt+1} - h_{nt} - \frac{\Delta t}{A_n}\left(\sum_{e \in E^{in}(n)} q_{et} - \sum_{e \in E^{out}(n)} q_{et}\right) = 0, \forall n \in N_t, \tag{2}$$

where $A_n$ represents the cross-section area of the tank, and $E^{in}(n)$ and $E^{out}(n)$ are respectively the set of incoming and outgoing links for node $n$.

The flow balance in node $n \in N_j$, having a given demand profile $d_{nt}$, is described by:

$$\sum_{e \in E^{\text{in}}(n)} q_{et} - \sum_{e \in E^{out}(n)} q_{et} - d_{nt} = 0, \forall n \in N_j. \tag{3}$$

Here, we assume that the demand $d_{nt}$ is positive if the water flow is leaving the network at node $n$, and it is fixed to zero for nodes having no demands.

Friction losses in pipe-edges $E_{pi}$ may generically be described using a formula expressing the head loss as a function of the flow and of the pipe resistance coefficient $a_e$:

$$\Delta h_{et} = a_e q_{et}{}^B, \forall e \in E_{pi} \tag{4}$$

where B is the generic flow exponent. Different headloss expressions are available, and Hazen-Williams and Darcy-Weissbach formulas are among the most widely adopted both in industry and literature [5], [7]. In the Hazen-Williams formula, (4) becomes:

$$\Delta h_{et}(q_{et}) = \frac{10.67 L_e}{C_e{}^{1.852} d_e{}^{4.871}} \operatorname{sign}(q_{et}) |q_{et}|^{1.852}, \forall e \in E_{pi}, \tag{5}$$

where $L_e$ and $d_e$ are respectively the pipe length and diameter, and $C_e$ is the Hazen-Williams pipe roughness coefficient. In case of the Darcy-Weissbach formula, (4) becomes:

$$\Delta h_{et}(q_{et}) = \frac{8 L_e \lambda_e}{g \pi^2 d_e{}^5} \operatorname{sign}(q_{et}) q_{et}{}^2, \forall e \in E_{pi}, \tag{6}$$

where $\lambda_e = \lambda_e(q_{et})$ represents the pipe friction coefficient and depends on the Reynolds number, which nonlinearly depends on the flow. Additional minor losses in pipes, that could be caused by turbulence induced by the network layout (e.g. bends, fittings, etc.), are given by:

$$\Delta h_{m_{et}}(q_{et}) = \frac{\operatorname{sign}(q_{et}) q_{et}{}^2}{2g(\pi(d_e/2)^2)^2}, \forall e \in E_{pi}, \tag{7}$$

and can be added to the main headloss term described by (5) or (6) to obtain the total headloss. Thus, for every pipe, it is possible to write the following head balance:

$$h_{it} - h_{jt} - \Delta h_{et}(q_{et}) - \Delta h_{m_{et}}(q_{et}) = 0, \forall e = (i,j) \in E_{pi}. \tag{8}$$

The pump's head increase $\Delta h_{pt}$ for fixed-speed pumps is obtained by the head-flow characteristic diagrams of the pump, given the flow defined by the network current operating point. Here, we assume that the pump characteristic curves are defined by a number of operating points provided by the pump constructor of measured by dedicated "experiments". We then fit a continuous function of the form:

$$\Delta h_{pt}(q_{pt}) = A_p - B_p q_{pt}{}^{C_p}, \tag{9}$$

obtaining the constants $A_p$, $B_p$ and $C_p$ describing the head-flow curve for each fixed-speed pump $p \in E_{pu}$. Then, since

in the graph $G = (N, E)$ representing the water network pumps are modelled as links, we obtain the following equation:

$$h_{jt} - h_{it} - \Delta h_{pt}(q_{pt}) = 0, \text{with } \forall p = (i, j) \in F_{\text{pu}}. \tag{10}$$

In some embodiments, the reservoir-node, the junction-node, and/or the demand-point-node, are attributed with an address. The address may be a regular address - i.e. "house in a town" -, a GPS coordinate, or other kind of addresses. This may advantageously accelerate the finding of the next junction-node.

An aspect relates to a computer program product comprising instructions, which, when is executed by a computer and/or a controller, cause the computer and/or controller to carry out the method according any one of the preceding claims.

An aspect relates to a computer-readable storage medium where a computer program or a computer program product as described above is stored on.

An aspect relates to a use of the calibrated hydraulic model as described above and/or below for performing a sensitivity analysis of the water distribution network. The sensitivity analysis may be beneficial to the selection of which node to examine while branching, since picking the node with higher sensitivity - i.e. with a higher potential information content - could potentially speed up the procedure by providing a "supportive selection method" that may help deciding and/or prioritizing in which order the network branches are examined and the manual sampling is performed. The sensitivity analysis may further contribute to install further metering devices in a targeted way, e.g. at selected "next junction-nodes" of high sensitivity.

For further clarification, the invention is described by means of embodiments shown in the figures. These embodiments are to be considered as examples only, but not as limiting.

Brief Description of the Drawings

The drawings depict:

| | |
|---|---|
| **Figs. 1 - 4** | schematically a very small exemplary water distribution network according to an embodiment; |
| **Fig. 5(a)** - **5(f)** | schematically a small exemplary water distribution network according to an embodiment; |
| **Fig. 6** | a flow diagram according to an embodiment. |

Detailed Description of Embodiments

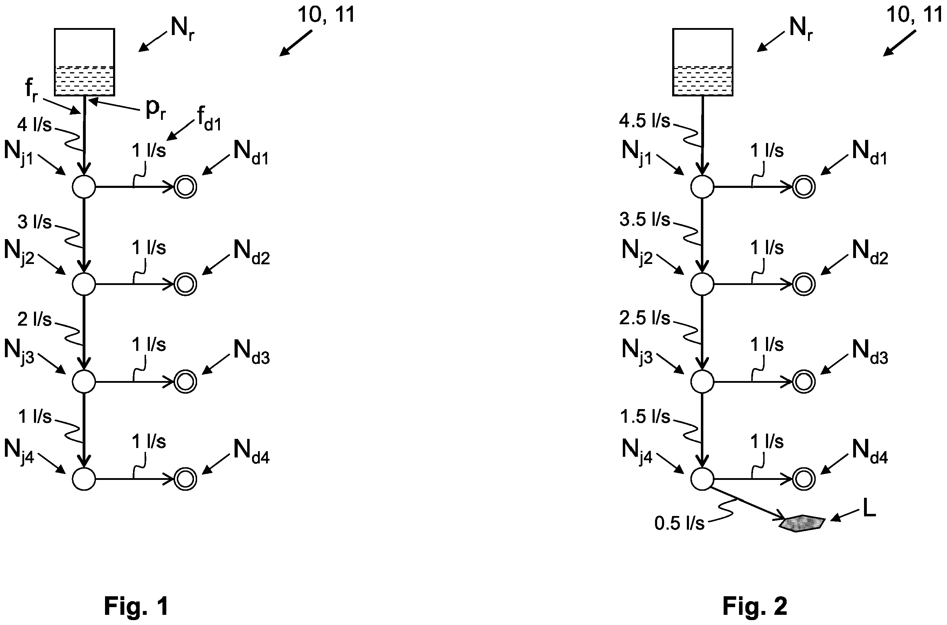

**Fig. 1** shows schematically a calibrated hydraulic model 11 of a simplified very small exemplary water distribution network 10 according to an embodiment. The model 11 comprises a reservoir-node N, on top of Fig. 1, for instance a water basin able to provide all the necessary water flow at a given pressure. The reservoir has a nominal reservoir flow f, and a nominal reservoir pressure $p_r$ for the reservoir-node $N_r$. The circles $N_{j1}$ - $N_{j4}$ represent junctions, i.e. nodes of the graph defined in the previous Section. The double-circles $N_{d1}$ - $N_{d4}$ represent demand-points, i.e. consumers of the water. The edges between the circles $N_{ji}$ and the double-circles $N_{di}$ are pipe-edges $E_{pi}$, which represent pipes. The pipes satisfy given water demands of the demand points or consumers $N_{j1}$ - $N_{j4}$, here a nominal demand flow $f_{d1}$ - $f_{d4}$ of 1 litre per second (l/s) each. The circles $N_{j1}$ - $N_{j4}$ are connected by pipes with nominal flows between 4 l/s and 1 l/s. Here, for simplicity effects of pressure, elevation and pressure losses in pipes are neglected, and it is assumed that the water flow in the network is driven by the external demands and leakages, so that the reservoir can provide infinite flow if needed, and that the flow is perfectly balanced in all junctions, i.e. the sum of inlet flow equals that of outlet flow.

**Fig. 2** shows schematically the calibrated hydraulic model 11 of **Fig. 1** with a leak L from node $N_{j4}$. The flow rate of this leak L may be 0.5 l/s. It is assumed that a calibrated hydraulic model of the water network of **Fig. 1** is available, which can be used to simulate the network behaviour under nominal conditions and obtain "virtual sensors" for all nodes and pipes where no instrumentation is installed.

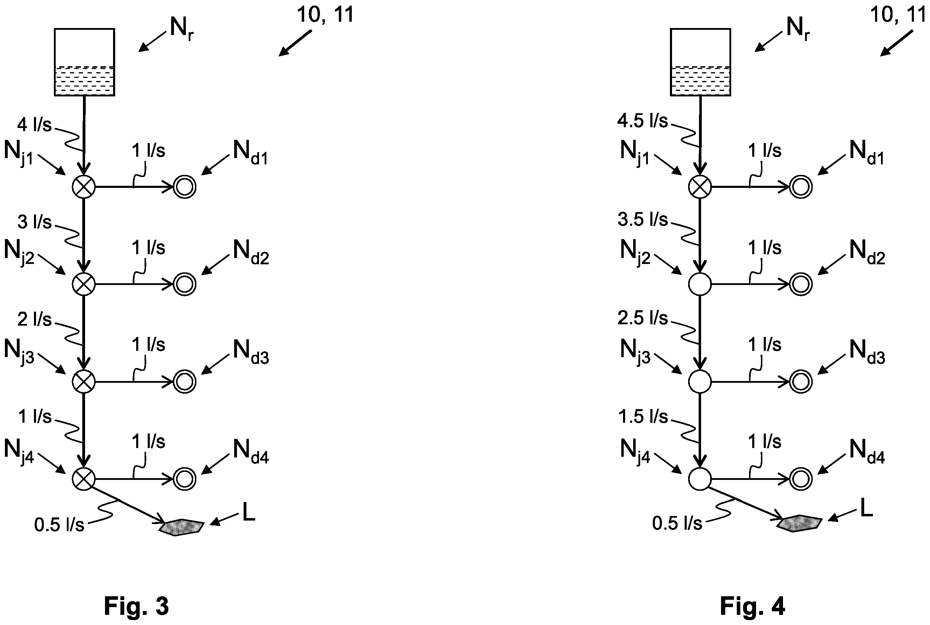

**Fig. 3** shows schematically the calibrated hydraulic model 11 of **Fig. 2.** In this water distribution network 10, all junctions $N_{j1}$ - $N_{j4}$ are provided with metering devices or sensors, represented here as crossed circles ⊗. In the network of **Fig. 3,** the leak location finding procedure is straightforward, since by performing a flow balance in every node under nominal demand conditions, the leakage position will correspond to the node where the nominal flowrate results unbalanced. In general, it is common to use demand forecast with related uncertainty bounds instead of a nominal demand, and the described approach is then extended by considering a node as "leaky" if the flow imbalance is greater than a threshold defined as a function of the demand forecast uncertainty region and of the network structure. The threshold may be the nominal flow plus a second predefined flow $f2_{pd}$.

However, in real water distribution networks, the number of nodes where sensors and real-time measurements are available may only be a small fraction of the total number of nodes, as shown in **Fig. 4,** and an easy leak location finding procedure as described for **Fig. 3** cannot be applied. Then, additional manually collected measurements are necessary to carry out the leak location finding procedure as described above and/or below. This advantageously allows to minimize the number of required manual sampling and associated time and costs, even if only a few continuously measuring devices are available. In this approach, a leaky node is assumed to behave like an emitter node, according to:

$$q_{f_i} = C_i p_i^{\gamma}$$

Where $q_{f_i}$ is the leak flow for node $i$, and $C_i$ and $p_i$ represent respectively the emitter coefficient (function of node and pipes physical properties) and the node pressure, $\gamma$ is an exponent that depends on the chosen headloss model, i.e. $\gamma = 0.5$ for Hazen-Williams. The flow balance for generic node $i$ is then modelled as:

$$\sum_{e \in E^{\text{in}}(i)} q_e - \sum_{e \in E^{\text{out}}(i)} q_e - d_i - q_{f_i} = 0$$

Where $q_e$ represents the flow of an inlet or outlet pipe connected to node $i$, $E^{\text{in}}(i)$ and $E^{\text{out}}(i)$ are the sets of all inlet and outlet pipes connected to $i$, respectively, and $d_i$ is the node demand, i.e. the water flow leaving the node. The headloss (pressure loss) $\Delta h_e$ for generic pipe $e$ has the form:

$$\Delta h_e = a_e q_e^{B}$$

Where the parameters $a_e$ and $B$ depend on the chosen headloss model. Then, considering nodes $i,j$ and the pipe $e$ connecting them, the following head balance holds:

$$h_i - h_j - \Delta h_e = 0$$

Then, each real node of the considered water network area is considered as a virtual sensor, if no real measurements are available for that node. This means it could be a candidate node for manual sampling. In order to choose which nodes to prioritize during the manual sampling operations, a sensitivity and covariance analysis is performed, to identify which nodes will bring more relevant information towards the determination of the leak location. To do so, different leak scenarios are simulated using the network hydraulics model, i.e. one scenario for every real and virtual node in the considered area, where that node is considered to have a leak with flow described by $q_{f_i}$, see above. A sensitivity matrix $S$ is computed, where the sensitivity of the pressure difference of every real node in the area to all potential leaks is obtained as:

$$S = \begin{pmatrix} \dfrac{\delta p_1}{q_{f_1}} & \cdots & \dfrac{\delta p_1}{q_{f_p}} \\ \vdots & \ddots & \vdots \\ \dfrac{\delta p_s}{q_{f_1}} & \cdots & \dfrac{\delta p_s}{q_{f_p}} \end{pmatrix}, \quad s_{ij} = \frac{p_{i_{leak_j}} - p_{i_{no-leak}}}{q_{f_j}}$$

Where $s$ is the number of real network nodes in the area, and $p$ is the number of real and virtual nodes in the area where a potential leak is simulated. Here, $p_{i_{leak_j}}$ is the simulated pressure at node $i$ for the scenario of a leak at node $j$, $p_{i_{no-leak}}$ is the measured or simulated pressure at node $i$ for the scenario with no leak in the network, and $s_{ij}$ is the element at row $i$ and column $j$ of $S$. Then, in case one or more nodes in the area has a sensor collecting pressure measurements, a residual vector is computed as:

$$r = \begin{pmatrix} p_{1_{meas}} - p_{1_{no-leak}} \\ \vdots \\ p_{n_{meas}} - p_{n_{no-leak}} \end{pmatrix}$$

Then, considering the values in the sensitivity matrix $S$, and by computing a covariance function of choice between $S$ and the residual vector $r$, a node is chosen for manual sampling, e.g. evaluating with a weighted function which node has the highest sensitivity to the greatest number of potential leaks, and a low correlation with the residuals, meaning that it is a node that could bring a significant additional information since it has high sensitivity to leaks and low correlation with already available measurements. Once a new manually sampled measurement is connected, the described procedure is repeated on the remaining nodes, and the node with manually sampled measurement is then considered as a node with a sensor providing pressure measurements.

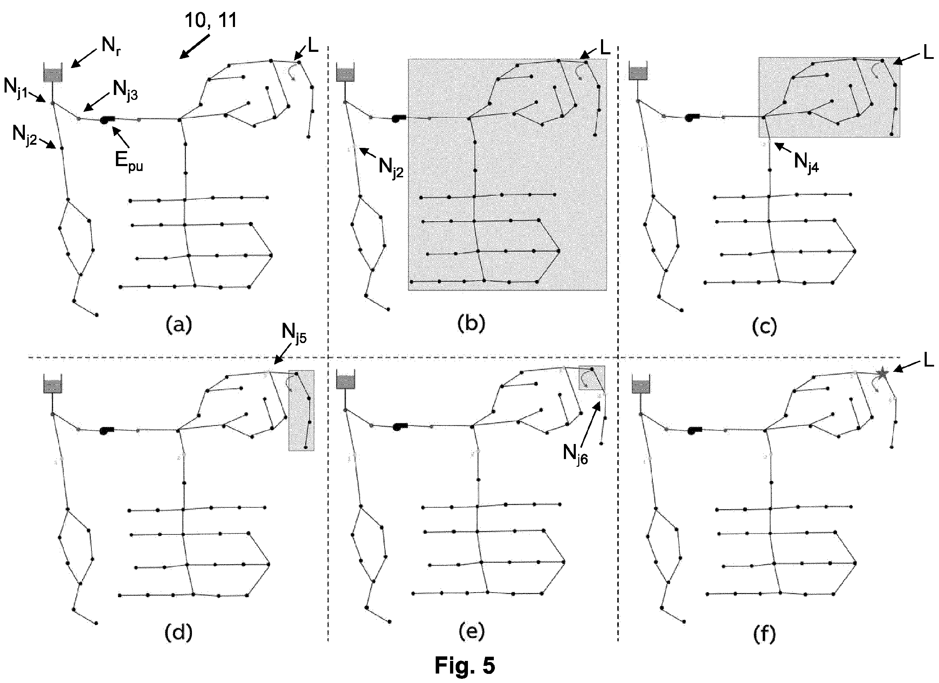

Now, going back to **Fig. 4,** which was introduced under rather simplified assumptions (i.e. we neglected the effects of pressure, elevation and pressure losses in pipes), let us assume that the only node with real-time measurement is node $N_{j1}$, and that the proposed algorithm indicated node $N_{j3}$ as the node providing the highest information content. Then, we can see that by computing the flow balance using the available data from nodes $N_{j1}$ and $N_{j3}$, it would become clear that the flow is balanced in $N_{j1}$ and $N_{j3}$ and between them, thus indicating that the flow must be balanced in node $N_{j2}$ and imbalanced in node $N_{j4}$, which would be an indicator of the suspected leak L location. **Fig. 5 (a) - 5 (f)** show schematically a calibrated hydraulic model 11 of a further small exemplary water distribution network 10 according to an embodiment. For better visibility, only a few reference signs - i.e. only the most relevant ones - are shown on the figures. All figures **Fig. 5 (a) - 5 (f)** show the water distribution network 10 with a reservoir-node $N_r$, a pump-edge $E_{pu}$, a plurality of junction-nodes $N_j$, and a leak L. For better visibility, demand-point-nodes $N_d$, which may be connected to the junction-nodes $N_j$, are not depicted. The model 11 has several branches, for example at node $N_{j1}$, with one branch toward nodes $N_{j2}$ and another branch toward $N_{j3}$.

Once an increased flow at reservoir-node $N_r$ is noticed, a leak-locating subroutine may be started. The increased flow may be noticed by sensing a measured reservoir flow $fm_{ri}$ that is greater than the nominal reservoir flow $f_{ri}$ plus a first predefined flow $f1_{pd}$. The leak-locating subroutine may be started by taking, in downstream direction, the junction-node $N_{j1}$ with two or more branches. Then, in downstream direction, a next junction-node $N_{j2}$, which is connected to the junction-node $N_{jk}$, is selected, as shown in **Fig. 5 (b).** At the selected next junction-node $N_{j2}$ in downstream direction, a measured next junction flow $fm_{j2}$ (reference sign not shown) is measured. The measured next junction flow $fm_{j2}$ turned out to be the same as the computed next junction flow $f_{j2}$ of the calibrated hydraulic model 11. As a consequence, this branch (of $N_{j2}$ and following nodes) can be sorted out, i.e. the leak L must be part of the other branch, marked in grey in **Fig. 5 (b).** In the next steps, the leak-locating subroutine is continued. As shown in **Fig. 5 (c),** node $N_{j4}$ is selected. This is a smart selection, because the other two branches are joined at node $N_{j5}$. Thus, measuring node $N_{j4}$ may give a clearer indication than measuring any of the other branches. Since the branch of $N_{j4}$ can be sorted out, the next node to be selected and measured is $N_{j5}$. $N_{j5}$ has an increased flow and, thus, this branch is taken; see **Fig. 5 (d).** Based on the model 11, e.g. on its sensitivity analysis, the node $N_{j6}$ is selected and measured; see **Fig. 5 (e).** This node $N_{j6}$ shows no increased flow. Hence, the leak L is probably in the area of the node before; see **Fig. 5 (f).** So, the leak L is located based on the measured next junction flow $fm_{j6}$.

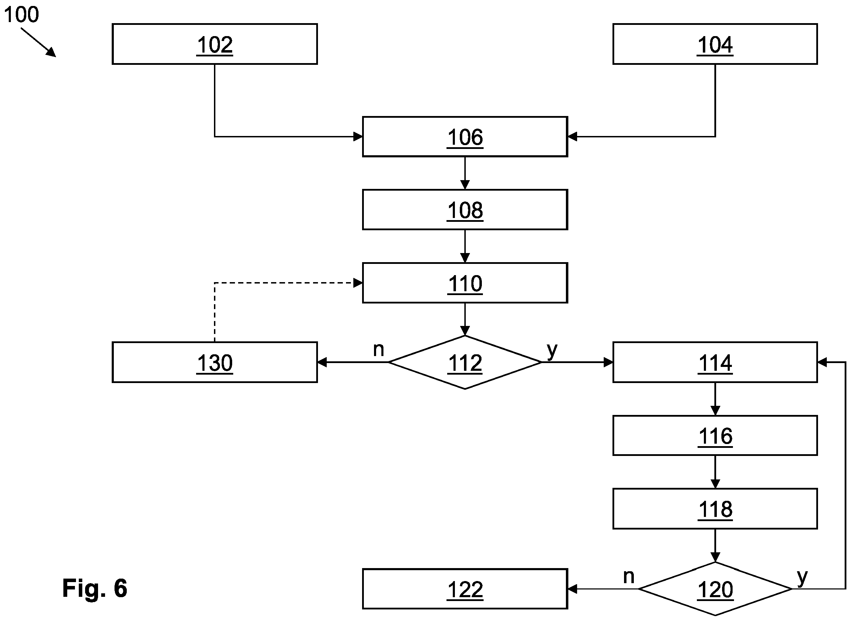

**Fig. 6** shows a flow diagram 100 according to an embodiment, sketching a computer-implemented method for locating a leak L in a water distribution network 10 (see the figures before). In a step 102, a directed graph that represents the water distribution network 10 is provided. The nodes of the graph comprise at least one reservoir-node $N_r$, at least one junction-node $N_j$, and at least one demand-point-node $N_d$, which represent a reservoir, a junction, and a demand point of the water distribution network 10, respectively. The edges of the graph comprise at least one pipe-edge $E_{pi}$, which represents a pipe. In a step 104, under nominal conditions, a nominal reservoir flow f, and a nominal reservoir pressure $p_r$ for each reservoir-node $N_r$, and a nominal demand flow $f_d$ for each demand point node $N_d$ of the water distribution network 10 is provided. In a step 106, a calibrated hydraulic model 11 of the water distribution network 10 is constructed, based on the directed graph, the nominal reservoir flow $f_r$, the nominal reservoir pressure $p_r$, and the nominal demand flow $f_d$ for each related node of the water distribution network 10. In a step 108, for the calibrated hydraulic model 11 of the water network, a computed nominal junction flow $fm_{ji}$ for each junction-node $N_{ji}$ of the water distribution network 10 is computed.

In a step 110, for each reservoir-node $N_{ri}$, a measured reservoir flow fm, is measured. The measurement may be performed on a regular basis or even continuously. In a step 112, a decision is taken if, for the at least one reservoir-node $N_{ri}$, the measured reservoir flow $fm_{ri}$ is greater than the nominal reservoir flow $f_{ri}$ plus a first predefined flow $f1_{pd}$. If not, no specific action may be taken (step 130), and the measured reservoir flow fm, may be measured again. If yes, a step 114 is performed, i.e. in downstream direction, a junction-node $N_{jk}$ with two or more branches is taken. In a step 116, a next junction-node $N_{jk+1}$ in downstream direction is selected, the junction-node $N_{jk+1}$ being which is connected to the junction-node $N_{jk}$. In a step 118, a measured next junction flow $fm_{jk+1}$ of the selected next junction-node $N_{jk+1}$ in

downstream direction is measured. In a step 120, the steps of taking 114, selecting 116, and measuring 118 are continued, while the measured next junction flow $fm_{jk+1}$ in the selected branch is greater than the computed next junction flow $f_{jk+1}$ plus a second predefined flow $f2_{pd}$. In a step 122, the leak L is located based on the measured next junction flow $fm_{jk+1}$.

List of Reference Symbols

| | |
|---|---|
| 10 | water distribution network |
| 11 | calibrated hydraulic model |
| 100 | flow diagram |
| 102-122 | steps |
| $E_{pi}$ | pipe-edge |
| $E_{pu}$ | pump-edge |
| $f1_{pd}$ | first predefined flow |
| $f2_{pd}$ | second predefined flow |
| $f_d$ | demand flow |
| $fm_{jk+1}$ | next junction flow |
| $fm_r$ | measured reservoir flow |
| $f_r$ | nominal reservoir flow |
| L | leak |
| $N_d$ | demand-point-node |
| $N_j$ | junction-node |
| $N_{jk+1}$ | next junction-node |
| N, | reservoir-node |
| $p_r$ | nominal reservoir pressure |

**Claims**

1. A computer-implemented method for locating a leak (L) in a water distribution network (10), the method comprising the steps of:

   providing a directed graph that represents the water distribution network (10),

   the nodes of the graph comprising at least one reservoir-node ($N_r$),
   at least one junction-node ($N_j$), and at least one demand-point-node ($N_d$), which represent a reservoir, a junction, and a demand point of the water distribution network (10), respectively,
   the edges of the graph comprising at least one pipe-edge ($E_{pi}$), which represents a pipe;

   providing, under nominal conditions,

   a nominal reservoir flow ($f_r$) and a nominal reservoir pressure ($p_r$) for each reservoir-node ($N_r$), and
   a nominal demand flow ($f_d$) for each demand point node ($N_d$) of the water distribution network (10);

   constructing a calibrated hydraulic model (11) of the water distribution network (10), based on the directed graph, the nominal reservoir flow ($f_r$), the nominal reservoir pressure ($p_r$), and the nominal demand flow ($f_d$) for each related node of the water distribution network (10);
   computing, for the calibrated hydraulic model (11) of the water network,
   a computed nominal junction flow ($fm_{ji}$) for each junction-node ($N_{ji}$) of the water distribution network (10);
   measuring, for each reservoir-node ($N_{ri}$), a measured reservoir flow ($fm_r$);
   if, for at least one of the reservoir-nodes ($N_{ri}$), the measured reservoir flow ($fm_{ri}$) is greater than the nominal reservoir flow ($f_{ri}$) plus a first predefined flow ($f1_{pd}$):

   taking, in downstream direction, a junction-node ($N_{jk}$) with two or more branches;
   selecting, in downstream direction, a next junction-node ($N_{jk+1}$), which is connected to the junction-node ($N_{jk}$);
   measuring a measured next junction flow ($fm_{jk+1}$) of the selected next junction-node ($N_{jk+1}$) in downstream direction; and

continuing the steps of taking, selecting, and measuring, while the measured next junction flow ($fm_{jk+1}$) in the selected branch is greater than the computed next junction flow ($f_{jk+1}$) plus a second predefined flow ($f2_{pd}$),

so that the leak (L) is located based on the measured next junction flow ($fm_{jk+1}$).

2. The method of claim 1,
   wherein the selecting of the next junction-node ($N_{jk+1}$) is done in a breadth-first manner and/or based on a sensitivity analysis.

3. The method of claim 1 or 2,
   wherein the measuring of the selected next junction-node ($N_{jk+1}$) is done by a temporary measuring device.

4. The method of any one of the preceding claims,

   wherein the nodes of the graph further comprise at least one tank-node ($N_t$), which represents a tank, for which, under nominal conditions, a nominal tank flow ($f_r$) and a nominal tank pressure ($p_r$) for the tank-node ($N_t$) is provided, and
   the constructing of the calibrated hydraulic model (11) of the water network is further based on the nominal tank flow ($f_r$) and the nominal tank pressure ($p_r$) for the tank-node ($N_t$).

5. The method of any one of the preceding claims,

   wherein the edges of the graph further comprise at least one pump-edge ($E_{pu}$), which represents a pump, and the constructing of the calibrated hydraulic model (11) of the water network is further based on the nominal pump flow ($f_{pu}$) for the pump-edge ($E_{pu}$).

6. The method of any one of the preceding claims,
   wherein the nominal demand flow ($f_d$) for the at least one demand-point-node ($N_d$) is obtained by a demand forecast, by a historical time-pattern, and/or by a metering device at an input of the demand-point-node ($N_d$).

7. The method of any one of the preceding claims,
   wherein the water distribution network (10) is partitioned into a plurality of district metered areas, DMAs, wherein a DMA-flow is measured on the DMA's at least one inlet point and/or on the DMA's at least one outlet point.

8. The method of any one of the preceding claims,
   wherein the calibrated hydraulic model (11) of the water distribution network (10) is further based on flow balance of the at least one junction-node ($N_j$) and/or on friction losses in the at least one pipe-edge ($E_{pi}$), and on the nominal reservoir flow ($f_r$) and the nominal reservoir pressure ($p_r$) for each reservoir-node ($N_r$).

9. The method of any one of the preceding claims,
   wherein the reservoir-node (Nr), the junction-node (Nj), and/or the demand-point-node (Nd), are attributed with an address.

10. A computer program product comprising instructions, which, when is executed by a computer and/or a controller, cause the computer and/or controller to carry out the method according any one of the preceding claims.

11. A computer-readable storage medium on which the computer program according to claim 10 is stored.

12. Use of the calibrated hydraulic model (11) of any one of claims 1 - 9 for performing a sensitivity analysis of the water distribution network (10).

**Fig. 1**

**Fig. 2**

EP 4 455 629 A1

EP 4 455 629 A1

10, 11

$N_r$

4 l/s

$N_{j1}$     1 l/s     $N_{d1}$

3 l/s

$N_{j2}$     1 l/s     $N_{d2}$

2 l/s

$N_{j3}$     1 l/s     $N_{d3}$

1 l/s

$N_{j4}$     1 l/s     $N_{d4}$

0.5 l/s     L

**Fig. 3**

10, 11

$N_r$

4.5 l/s

$N_{j1}$     1 l/s     $N_{d1}$

3.5 l/s

$N_{j2}$     1 l/s     $N_{d2}$

2.5 l/s

$N_{j3}$     1 l/s     $N_{d3}$

1.5 l/s

$N_{j4}$     1 l/s     $N_{d4}$

0.5 l/s     L

**Fig. 4**

**Fig. 5**

EP 4 455 629 A1

Fig. 6

Europäisches
Patentamt

European
Patent Office

Office européen
des brevets

# EUROPEAN SEARCH REPORT

**Application Number**

EP 23 16 9598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SOPHOCLEOUS SOPHOCLES ET AL: "A Graph-based Analytical Technique for the Improvement of Water Network Model Calibration", PROCEDIA ENGINEERING, ELSEVIER BV, NL, vol. 154, 24 August 2016 (2016-08-24), pages 27-35, XP029697843, ISSN: 1877-7058, DOI: 10.1016/J.PROENG.2016.07.415 | 12 | INV. G01M3/28 E03B7/00 F17D5/06 |
| A | * the whole document * | 1-11 | |
| X | GERTLER J ET AL: "Leak detection and isolation in water distribution networks using principal component analysis and structured residuals", CONTROL AND FAULT-TOLERANT SYSTEMS (SYSTOL), 2010 CONFERENCE ON, IEEE, PISCATAWAY, NJ, USA, 6 October 2010 (2010-10-06), pages 191-196, XP031840796, ISBN: 978-1-4244-8153-8 | 12 | |
| A | * the whole document * | 1-11 | TECHNICAL FIELDS SEARCHED (IPC) |
| X | PEREZ RAMON ET AL: "Leak Localization in Water Networks: A Model-Based Methodology Using Pressure Sensors Applied to a Real Network in Barcelona [Applications of Control]", IEEE CONTROL SYSTEMS, IEEE, USA, vol. 34, no. 4, 14 July 2014 (2014-07-14), pages 24-36, XP011553976, ISSN: 1066-033X, DOI: 10.1109/MCS.2014.2320336 [retrieved on 2014-07-11] | 12 | G01M E03B F17D G06Q |
| A | * the whole document * | 1-11 | |

-/--

The present search report has been drawn up for all claims

| Place of search | Date of completion of the search | Examiner |
|---|---|---|
| The Hague | 26 September 2023 | Foster, Keir |

EPO FORM 1503 03.82 (P04C01)

page 1 of 2

| | Europäisches Patentamt European Patent Office Office européen des brevets | **EUROPEAN SEARCH REPORT** | Application Number EP 23 16 9598 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RAJESWARAN ARAVIND ET AL: "A graph partitioning algorithm for leak detection in water distribution networks", COMPUTERS & CHEMICAL ENGINEERING, vol. 108, 30 August 2017 (2017-08-30), pages 11-23, XP085282583, ISSN: 0098-1354, DOI: 10.1016/J.COMPCHEMENG.2017.08.007 * abstract; page 12, column 2, paragraph 2 - page 13, column 1, paragraph 1; figures 1,2 * * section 2.; figures 3-9 * * sections 5. and 6.; figures 11,12 * ----- | 1-12 | |

TECHNICAL FIELDS SEARCHED (IPC)

The present search report has been drawn up for all claims

| Place of search | Date of completion of the search | Examiner |
|---|---|---|
| The Hague | 26 September 2023 | Foster, Keir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)